# EUROPEAN PATENT SPECIFICATION

(11) **EP 2 938 708 B1**
(45) Date of publication and mention of the grant of the patent: **21.02.2018**
(21) Application number: 13870409.3
(22) Date of filing: 27.12.2013
(51) Int. Cl.: C10G 45/58, C10G 3/00, C10L 1/02, C10L 1/04

(54) **BLENDING OF DEWAXED BIOFUELS WITH MINERAL-BASED KERO(JET) DISTILLATE CUTS TO PROVIDE ON-SPEC JET FUELS**
MISCHEN VON ENTWACHSTEN BIOKRAFTSTOFFEN MIT MINERALBASIERTEN KERO(JET)-DESTILLATSCHNITTEN ZUR BEREITSTELLUNG VON ON-SPEC-DÜSENTREIBSTOFFEN
MÉLANGE DE BIOCARBURANTS DÉPARAFFINÉS AVEC DES FRACTIONS DE DISTILLATS DE KÉROSÈNE (AVIATION) MINÉRAUX POUR FORMER DES CARBURANTS AVIATION RÉPONDANT AUX SPÉCIFICATIONS

(30) Priority: 28.12.2012 US 201261746835 P
(43) Date of publication of application: 04.11.2015
(73) Proprietor: ExxonMobil Research and Engineering Company, Annandale, NJ 08801-0900 (US)
(72) Inventor: ABDALLAH, David, J., Moorestown, NJ 08057 (US); HOSKIN, Dennis, H., Westhampton, NJ 08060 (US); GAUGHAN, Roger, G., Sewell, NJ 08080 (US); WELLS, Paul, P., Mullica Hill, NJ 08062 (US); NOORMAN, Mike, T., Cinnaminson, NJ 08077 (US); JOHNSTON, Gary, J., Chantilly, VA 20151 (US); POIRIER, Marc-Andre, Sarnia, ON N7W 1C1 (CA); ROCKWELL, Gregory, P., Sarnia, ON N7S 5H9 (CA)
(74) Representative: ExxonMobil Chemical Europe Inc.
(86) International application number: PCT/US2013/077962
(87) International publication number: WO 2014/149117

(56) References cited:
- WO-A1-95/23836
- WO-A1-2008/152199
- US-A1- 2011 203 253
- US-A1- 2012 167 454
- Clh: "PRODUCT SPECIFICATIONS Aviation Turbine Fuel JP-8", CLH - Energy moves the world, we move energy., 21 June 2013 (2013-06-21), XP055283984, Retrieved from the Internet: URL:https://www.google.nl/url?sa=t&rct=j&q =&esrc=s&source=web&cd=14&ved=0ahUKEwiJgNv En73TAhUEVRQKHS2jC_gQFghsMA0&url=https%3A% 2F%2Fwww.clh.es%2Ffile%2FEspecificacionesP roducto%2FAVIATION%2520TURBINE%2520FUEL%25 20JP-8.pdf&usg=AFQjCNEauDtDAqxPodj58Z_9UnY DYrL8rQ&sig2=zsc29kIyH_zKnzgAT3YTYw&cad=rj a [retrieved on 2016-06-27]

## Description

### FIELD OF THE INVENTION

This invention involves fit-for-purpose jet fuel compositions and methods for making them. In particular, mineral-based kerosene type fuels and/or off-spec jet fuels can be made to be on-spec by blending them with a deoxygenated and isomerized biofuel or with a hydrotreated vegetable oil.

### BACKGROUND OF THE INVENTION

Rising costs and threats of shortages and supply interruptions have recently highlighted the need for alternative fuel sources to mineral-based fuel products. In addition, availability of mineral-based fuel products having expected or desirable properties and/or product composition has been recently changing as well. In the past, a standard solution to changing specifications and/or fuel product availabilities was to treat (and/or treat more severely) existing fuel compositions to result in a fuel that could meet increasingly stringent specifications. However, with treatment methods for existing mineral-based fuels being expensive and/or unable to meet the volume demand, past approaches are becoming decreasingly desirable and/or successful.

Biofuels (renewable fuels) have particularly become a focus for alternative fuels/fuel blends, as finding mineral-based additives/blendstocks with the appropriate compositional and physical properties has also been getting increasingly difficult. There have been some publications on the subject of using renewable feedstocks in kero(jet) applications.

U.S. Patent Application Publication No. 2009/0158637 discloses a process for producing aviation fuel from renewable feedstocks. The feedstocks include plant oils and animal fats and oils. The process involves treating a renewable feedstock by hydrogenating and deoxygenating to provide n-paraffins having from about 8 to about 24 carbon atoms. At least some of the n-paraffins are isomerized to improve cold flow properties. At least a portion of the paraffins are selectively cracked to provide paraffins meeting specifications for different aviation fuels such as JP-8.

U.S. Patent Application Publication No. 2009/0088351 discloses a method for processing triglyceride-containing, biologically-derived oils to produce lubricants and transportation fuels. The method comprises converting triglycerides to free fatty acids and then separating the fatty acids by saturation type. Such separation by type enables the preparation of both lubricants and transportation fuels.

U.S. Patent Application Publication No. 2008/0244962 discloses a method for producing an isoparaffinic product useful as jet fuel from a renewable feedstock. The method also includes co-producing a jet fuel and a liquefied petroleum gas (LPG) fraction from a renewable feedstock. The method includes hydrotreating the renewable feedstock to produce a heavy hydrotreated stream that includes n-paraffins and hydroisomerizing the hydrotreating unit heavy fraction to produce a hydroisomerizing unit heavy fraction that includes isoparaffins. The method also includes recycling the hydroisomerizing unit heavy fraction through the hydroisomerization unit to produce an isoparaffinic product that may be fractionated into a jet fuel and an LPG fraction. The produced product is a jet fuel produced from a renewable feedstock having specified cold flow properties.

U.S. Patent Application Publication No. 2006/0229222 relates to methods for improving the low temperature storage and performance properties of fatty acids and their derivatives, as well as of composition containing them, by the use of stabilizers selected from branched chain fatty acids, cyclic fatty acids, and polyamides. Jet fuels and diesel are mentioned as blend components for fatty acid compositions.

U.S. Patent Application Publication No. 2008/0163542 discloses blends of petroleum based fuels with renewable fuels to enhance the low temperature operability of the blends. Various performance indices, such as the Cold Filter Plugging Point, the Low Temperature Flow Test, Pour Point, and Cloud Point, are taken as measures of the low temperature performance characteristics of fuels such as kerosene-type aviation fuels, *e.g.,* JP-5, JP-8, Jet A, and Jet A-1. The bio-derived component in the blend is stated to be no more than 50% v/v in typical cases and more typically up to 35% v/v; very low proportions down to 0.5% are mentioned but with no advantage shown for such blends.

U.S. Patent Application Publication No. 2010/0005706 discloses fuel oil compositions based on blends of renewable and petroleum fuels with additives to enhance the resistance to forming particulates during low temperature storage.

Other relevant references can include U.S. Patent Application Publication Nos. 2008/0052983, 2008/0092436, 2009/0013617, 2009/0229172, 2009/0229173, 2009/0162264, 2010/0000908, 2010/014535, 2011/0061290, 2011/0203253, 2011/0126449, and 2012/0152803; U.S. Patent Nos. 3,573,198 and 7,928,273; PCT Publication No. WO 10/058580; the abstract by P.H. Steele et al., entitled "Comparison of hydroprocessed bio-oil gasoline, diesel and jet fuel fractions characteristics to ASTM standards for drop-in fuels", in ACS National Meeting Book of Abstracts for the American Chemical Society Conference: 240th ACS National Meeting and Exposition, August 22-26, 2010; and the abstract by Daniel Derr, entitled "Jet fuel from biologically-derived triacylglycerol oils", in Preprints of Symposia - American Chemical Society, Division of Fuel Chemistry (2010), 55(2), 414.
US 2011/203253 A1 discloses a method for producing aviation fuel.

There are few publications and/or little publicly available information regarding jet fuels/cuts, particularly mineral-based kero(jet) fuels/cuts, that are off-specification in one or more ways and possible blend components to tailor the properties of a resulting blend to be useful as a fit-for-purpose jet fuel composition. Highly dewaxed (isomerized) and deoxygenated paraffinic biofuels can be particularly useful as blendstocks for such off-specification kero(jet) fuels/cuts. Additionally or alternately, hydrotreated vegetable oils can be particularly useful as blendstocks for off-specification jet fuels that contain higher concentrations of cracked components, such as low-smoke-point jet fuels containing heavy cat naphtha.

### SUMMARY OF THE INVENTION

The invention relates to the use of a renewable component for making an on-spec jet fuel composition from an off-spect jet fuel as defined in claim 1.

In the invention, the step of providing the renewable component can comprise: providing a raw renewable triglyceride and/or fatty acid composition having an oxygen content and wherein at least 85% of acyl chains have from 9 to 15 carbons; contacting the raw renewable composition with an H2-containing gas in the presence of a deoxygenation catalyst under conditions sufficient to achieve an oxygen content of less than 100 wppm and/or to reduce the oxygen content by at least 98% by weight; and simultaneously with or following the deoxygenation step, performing dewaxing by contacting with an H2-containing gas in the presence of a dewaxing catalyst under conditions sufficient to predominantly cause isomerization and to cause minimal cracking, such that the product of the dewaxing step has the requisite isoparaffin to normal paraffin ratio and aromatics content.

### BRIEF DESCRIPTION OF THE DRAWINGS

Figure 1 graphically shows the effect on jet-type blend smoke point of the combination of varying proportions of heavy cat naphtha (HCN) with jet-type distillate components.
Figure 2 graphically shows the effect on jet fuel composition smoke point of the combination of varying proportions of hydrotreated vegetable oil (HVO) with jet-type blends.

### DETAILED DESCRIPTION OF THE EMBODIMENTS

The present invention can involve compositions useful for on-spec jet fuels and methods for making those compositions. Thus, one of the methods for making a jet fuel composition can include: providing a mineral-based kero/jet-type distillate component that is in some way off-specification for jet fuel; providing a renewable component that has been treated to achieve a set of particular compositions and/or physical/bulk properties; and blending the components together to improve one or more measurable properties to thus achieve a fit-for-purpose (an on-spec) jet fuel composition.

The terms "mineral" and "mineral-based" are used herein to denote components or compositions that are naturally occurring and derived from non-renewable sources. Examples of such non-renewable resources can include petroleum oil/gas deposits, shale oil/gas deposits, natural gas deposits, coal deposits, and combinations thereof, including any hydrocarbon-laden deposits that can be mined/extracted from ground/underground sources.

There are many ways in which the mineral-based kero/jet-type distillate component according to the invention can be characterized. One convenient way is through its physico-chemical properties. For instance, the mineral-based kero/jet-type distillate component can advantageously have an initial boiling point of at least about 100°C and two or more of the following enumerated properties: a T90 boiling point from 260°C to 295°C; a final boiling point from 275°C to 300°C; a freezing point from -45°C to -20°C; a smoke point from 14 mm to 19 mm; a naphthalene content from 2.8 vol% to 3.5 vol%; a JFTOT VTR rating failing the jet fuel specification; and a sulfur content from 2000 wppm to 3500 wppm. In some embodiments, the mineral-based kero/jet-type distillate component can advantageously have three or more of the enumerated properties, *e.g.,* four or more, five or more, six or more, or all of the enumerated properties.

When approximating boiling point ranges of compositions, ASTM D86 can be used, although ASTM D2887 could alternately be used. Initial boiling point can be understood to represent the temperature at which the first material in a composition/component is observed to turn from liquid phase to vapor phase. Conversely, final boiling point can be understood to represent the temperature at which the last material in a composition/component is observed to turn from liquid phase to vapor phase. As a convention, the temperature at which approximately "x" percent of the composition/component has turned from liquid phase to vapor phase can be termed the "T[x] boiling point" according to ASTM D86. Thus, for example, the point at which -10% of a composition/component has turned from liquid phase to vapor phase is termed herein the T10 boiling point. The freezing point can be determined according to ASTM D4529. The smoke point can be determined according to ASTM D1322. The naphthalene content can be determined according to ASTM D1840. The sulfur content can be measured according to at least one of the following standard test methods: ASTMs D1266, D2622, D4294, and D5453. JFTOT can be determined according to ASTM D3241 using a visual tuberator (VTR), in which passing ratings can be considered as 1, <2, 2, and <3, and in which failing ratings can be considered as 3, <4, 4, and peacock.

Additionally or alternatively, the mineral-based kero/jet-type distillate component can exhibit an ASTM D86 initial boiling point of at least about 100°C, *e.g.,* at least about 105°C, at least about 110°C, at least about 115°C, at least about 120°C, at least about 125°C, at least about 130°C, at least about 135°C, at least about 140°C, at least about 145°C, at least about 150°C, from about 100°C to about 160°C, from about 100°C to about 150°C, from about 100°C to about 140°C, from about 100°C to about 130°C, from about 105°C to about 160°C, from about 105°C to about 150°C, from about 105°C to about 140°C, from about 105°C to about 130°C, from about 110°C to about 160°C, from about 110°C to about 150°C, from about 110°C to about 140°C, from about 110°C to about 130°C, from about 115°C to about 160°C, from about 115°C to about 150°C, from about 115°C to about 140°C, from about 115°C to about 130°C, from about 120°C to about 160°C, from about 120°C to about 150°C, from about 120°C to about 140°C, from about 120°C to about 130°C, from about 125°C to about 160°C, from about 125°C to about 150°C, or from about 125°C to about 140°C. Further additionally or alternatively, the mineral-based kero/jet-type distillate component can exhibit an ASTM D86 10% distillation point within the range from about 150°C to about 200°C, for example from about 160°C to about 180°C. Still further additionally or alternatively, the mineral-based kero/jet-type distillate component can exhibit an ASTM D86 90% distillation point within the range from about 250°C to about 295°C, *e.g.,* from about 250°C to about 290°C, from about 250°C to about 285°C, from about 250°C to about 280°C, from about 260°C to about 295°C, from about 260°C to about 290°C, from about 260°C to about 285°C, from about 260°C to about 280°C, from about 270°C to about 295°C, from about 270°C to about 290°C, from about 270°C to about 285°C, or from about 270°C to about 280°C. Yet further additionally or alternatively, the mineral-based kero/jet-type distillate component can exhibit an ASTM D86 final boiling point less than about 300°C, *e.g.,* less than about 298°C, less than about 296°C, less than about 295°C, from about 265°C to about 300°C, from about 265°C to about 295°C, from about 265°C to about 290°C, from about 270°C to about 300°C, from about 270°C to about 295°C, from about 270°C to about 290°C, from about 275°C to about 300°C, from about 275°C to about 295°C, from about 275°C to about 290°C, from about 280°C to about 300°C, from about 280°C to about 295°C, from about 280°C to about 290°C, from about 285°C to about 300°C, from about 285°C to about 295°C, from about 290°C to about 300°C, or from about 295°C to about 300°C.

In embodiments according to the invention, the mineral-based kero/jet-type distillate component can exhibit a freezing point from about -50°C to about -20°C, *e.g.,* from about -50°C to about -25°C, from about -50°C to about -30°C, from about -50°C to about -35°C, from about -50°C to about -40°C, from about -45°C to about -25°C, from about -45°C to about -30°C, from about -45°C to about -35°C, from about -45°C to about -40°C, from about -40°C to about -20°C, from about -40°C to about -25°C, from about -40°C to about -30°C, from about -35°C to about -20°C, from about -35°C to about -25°C, from about -38°C to about -20°C, from about -38°C to about -25°C, or from about -38°C to about -30°C.

In embodiments according to the invention, the mineral-based kero/jet-type distillate component can exhibit a smoke point from about 14 mm to about 19 mm, *e.g.,* from about 14 mm to about 18 mm, from about 14 mm to about 17 mm, from about 14 mm to about 16 mm, from about 15 mm to about 19 mm, from about 15 mm to about 18 mm, from about 15 mm to about 17 mm, from about 16 mm to about 19 mm, from about 16 mm to about 18 mm, or from about 17 mm to about 19 mm.

In embodiments according to the invention, the mineral-based kero/jet-type distillate component can exhibit a sulfur content from about 2000 wppm to about 3500 wppm, *e.g.,* from about 2000 wppm to about 3400 wppm, from about 2000 wppm to about 3300 wppm, from about 2000 wppm to about 3200 wppm, from about 2000 wppm to about 3100 wppm, from about 2000 wppm to about 3000 wppm, from about 2000 wppm to about 2900 wppm, from about 2500 wppm to about 3500 wppm, from about 2500 wppm to about 3400 wppm, from about 2500 wppm to about 3300 wppm, from about 2500 wppm to about 3200 wppm, from about 2500 wppm to about 3100 wppm, from about 2500 wppm to about 3000 wppm, from about 2500 wppm to about 2900 wppm, from about 2700 wppm to about 3500 wppm, from about 2700 wppm to about 3400 wppm, from about 2700 wppm to about 3300 wppm, from about 2700 wppm to about 3200 wppm, from about 2700 wppm to about 3100 wppm, from about 2700 wppm to about 3000 wppm, from about 2700 wppm to about 2900 wppm, from about 2800 wppm to about 3500 wppm, from about 2800 wppm to about 3400 wppm, from about 2800 wppm to about 3300 wppm, from about 2800 wppm to about 3200 wppm, from about 2800 wppm to about 3100 wppm, from about 2800 wppm to about 3000 wppm, from about 2800 wppm to about 2900 wppm, from about 2900 wppm to about 3500 wppm, from about 2900 wppm to about 3400 wppm, from about 2900 wppm to about 3300 wppm, from about 2900 wppm to about 3200 wppm, from about 2900 wppm to about 3100 wppm, from about 2900 wppm to about 3000 wppm, from about 3000 wppm to about 3500 wppm, from about 3000 wppm to about 3400 wppm, from about 3000 wppm to about 3300 wppm, from about 3000 wppm to about 3200 wppm, from about 3000 wppm to about 3100 wppm, from about 3100 wppm to about 3500 wppm, from about 3100 wppm to about 3400 wppm, from about 3100 wppm to about 3300 wppm, from about 3100 wppm to about 3200 wppm, from about 3200 wppm to about 3500 wppm, from about 3200 wppm to about 3400 wppm, from about 3200 wppm to about 3300 wppm, from about 3300 wppm to about 3500 wppm, from about 3300 wppm to about 3400 wppm, or from about 3400 wppm to about 3500 wppm.

In some embodiments, the mineral-based kero/jet-type distillate component can optionally exhibit an olefin (unsaturated double bond) content of at least about 0.7% by weight, *e.g.,* at least about 0.8% by weight, at least about 0.9% by weight, at least about 1.0% by weight, at least about 1.1% by weight, at least about 1.2% by weight, at least about 1.3% by weight, or at least about 1.4% by weight.

Advantageously, the step of providing a renewable component that has been treated to achieve a set of particular compositions and/or physical/bulk properties can be satisfied by providing a deoxygenated and dewaxed renewable component derived from triglycerides and/or fatty acids. The deoxygenated and dewaxed renewable component can exhibit an isoparaffin to normal paraffin ratio from about 2:1 to about 6:1, *e.g.,* from about 2:1 to about 5:1, from about 2:1 to about 4:1, from about 2:1 to about 3:1, from about 3:1 to about 6:1, from about 3:1 to about 5:1, from about 3:1 to about 4:1, from about 4:1 to about 6:1 from about 4:1 to about 5:1, or from about 5:1 to about 6:1. Additionally or alternatively, the deoxygenated and dewaxed renewable component can exhibit an aromatics content less than about 5 vol%, *e.g.,* less than about 4 vol%, less than about 3 vol%, less than about 2 vol%, less than about 1 vol%, less than about 0.7 vol%, less than about 0.5 vol%, less than about 0.3 vol%, less than about 0.1 vol%, or less than about 0.05 vol%. Further additionally or alternately, the deoxygenated and dewaxed renewable component can exhibit an olefin (unsaturated double bond) content less than about 1.5% by weight, *e.g.,* less than about 1.2% by weight, less than about 1% by weight, less than about 0.8% by weight, less than about 0.7% by weight, less than about 0.6% by weight, less than about 0.5% by weight, less than about 0.4% by weight, less than about 0.3% by weight, less than about 0.2% by weight, or less than about 0.1% by weight.

In additional or alternative embodiments, the step of providing a renewable component that has been treated to achieve a set of particular compositions and/or physical/bulk properties can be satisfied by appropriately treating a raw renewable oil/fat composition to achieve the desired characteristics.

The raw renewable oil/fat composition can advantageously be derived predominantly (more than 50% by weight, *e.g.,* more than 60% by weight, more than 70% by weight, more than 80% by weight, more than 90% by weight, more than 95% by weight, or more than 99% by weight) or completely from triglycerides and/or fatty acid components. Triglycerides, as used herein, can include glycerol transesterified with three fatty acids, which are carboxylic acid heads attached to hydrocarbon acyl tails/chains. However, in some embodiments, triglycerides can include mono- and disubstituted versions of glycerol, as well as tri-substituted glycerol. It should be understood that fatty acids are described in terms of how many carbons on their molecule, which is one more than the number of carbons in their acyl chains (as the carboxylic acid carbon is not counted in the acyl chain but is still part of the molecule). Thus, a fatty acid having 14 carbons has an acyl chain with 13 carbons attached to a carboxylic acid (or ion or salt). Further, glycerides can be defined in the same manner - where a triglyceride has three chains of 14 carbons attached via an ester linkage to glycerol, the triglyceride can be said to have acyl chains with 13 carbons as well as the ester carbon (which would be a carboxylic acid, or ion or salt, carbon, if disconnected from the glycerol).

In preferred embodiments, at least 80% of the acyl chains (on both the triglycerides and fatty acids/ions/salts, if both are present) can have from 7 to 17 carbons, *e.g.,* from 7 to 15 carbons, from 7 to 13 carbons, from 7 to 11 carbons, from 9 to 17 carbons, from 9 to 15 carbons, from 9 to 13 carbons, or from 9 to 11 carbons. Additionally or alternatively, at least 85% of the acyl chains can have from 7 to 17 carbons, *e.g.,* from 7 to 15 carbons, from 7 to 13 carbons, from 7 to 11 carbons, from 9 to 17 carbons, from 9 to 15 carbons, from 9 to 13 carbons, or from 9 to 11 carbons. Alternatively, at least 90% of the acyl chains can have from 7 to 17 carbons, *e.g.,* from 7 to 15 carbons, from 7 to 13 carbons, from 7 to 11 carbons, from 9 to 17 carbons, from 9 to 15 carbons, from 9 to 13 carbons, or from 9 to 11 carbons. Further additionally or alternatively, at least 95% of the acyl chains can have from 7 to 17 carbons, *e.g.,* from 7 to 15 carbons, from 7 to 13 carbons, from 7 to 11 carbons, from 9 to 17 carbons, from 9 to 15 carbons, from 9 to 13 carbons, or from 9 to 11 carbons. Still further additionally or alternatively, at least 98% of the acyl chains can have from 7 to 17 carbons, *e.g.,* from 7 to 15 carbons, from 7 to 13 carbons, from 7 to 11 carbons, from 9 to 17 carbons, from 9 to 15 carbons, from 9 to 13 carbons, or from 9 to 11 carbons. Yet further additionally or alternatively, at least 99% (and/or substantially all) of the acyl chains can have from 7 to 17 carbons, *e.g.,* from 7 to 15 carbons, from 7 to 13 carbons, from 7 to 11 carbons, from 9 to 17 carbons, from 9 to 15 carbons, from 9 to 13 carbons, or from 9 to 11 carbons.

Once provided, the raw renewable fat/oil composition can be catalytically deoxygenated and dewaxed. These steps can be done simultaneously or in order (deoxygenation first, then dewaxing). It should be understood that, although the steps are strictly termed "deoxygenation" and "dewaxing" steps herein, other catalytic reactions may take place during them. For example, it can be common for unsaturated hydrocarbon bonds (*e.g.,* double/olefinic bonds, triple bonds, conjugated/aromatic bonds) to become saturated during the deoxygenation reaction and/or during the dewaxing reaction (*e.g.,* due to the presence of hydrogen gas in both and the multipurpose catalytic capability of most deoxygenation and/or dewaxing/isomerization catalysts).

When deoxygenation and dewaxing steps are accomplished simultaneously, the catalytic processes may be done in a single zone of a reactor where a deoxygenation catalyst is intimately mixed with a dewaxing catalyst, or they may be done using a single deoxygenation/dewaxing catalyst capable of catalyzing both reactions.

The dewaxing catalyst can usually be the same whether used in addition to a separate deoxygenation catalyst or as a single/combination catalyst. Nevertheless, when separate deoxygenation and dewaxing catalysts are used, the deoxygenation catalyst can include any catalyst capable of catalytically hydrotreating a hydrocarbon composition in the presence of a H2-containing gas. Examples of such separate deoxygenation catalysts can include, but are not necessarily limited to, bulk/massive nickel, oxides of one or more metals of Groups 6 and 8-12 of the Periodic Table of Elements (*e.g.,* iron, cobalt, nickel, chromium, molybdenum, tungsten, zinc copper, and combinations thereof), an active hydrogenation metal (*e.g.,* selected from Groups 8-10 of the Periodic Table of Elements, such as iron, cobalt, nickel, palladium, platinum, ruthenium, and combinations thereof) supported on an oxide (*e.g.,* alumina, silica, titania, magnesia, thoria, zirconia, yttria, ceria, and combinations thereof, including aluminosilicates, aluminophosphates, and/or silicoaluminophosphates), and combinations thereof. In some cases, partially (or almost completely) spent hydrotreating catalysts (*e.g.,* CoMo, NiMo, CoW, NiW, CoMoW, NiMoW) can still be used to catalytically deoxygenate. Additionally or alternately, water gas shift catalysts (*e.g.,* iron oxides such as Fe₃O₄) that would not have enough activity for hydrotreating sulfur- and/or nitrogen-containing feeds can be useful in catalytic deoxygenation reactions.

In such situations where deoxygenation is done in a separate zone and/or reactor, the deoxygenation conditions can include: an LHSV of the input stream from about 0.1 hr⁻¹ to about 20 hr⁻¹, *e.g.,* from about 0.5 hr⁻¹ to about 1.5 hr⁻¹ or from about 2 hr⁻¹ to about 20 hr⁻¹; a weight average bed temperature or an estimated internal temperature (WABT or EIT, abbreviated herein as "temperature") from about 550°F to about 700°F (about 288°C to about 371°C), *e.g.,* from about 575°F to about 675°F (about 302°C to about 357°C), from about 550°F to about 625°F (about 288°C to about 329°C), from about 550°F to about 600°F (about 288°C to about 315°C), or from about 600°F to about 650°F (about 315°C to about 343°C); a reactor pressure from about 50 psig (about 340 kPag) to about 600 psig (about 4.1 MPag), for example from about 100 psig (about 690 kPag) to about 400 psig (about 2.8 MPag), from about 50 psig (about 340 kPag) to about 300 psig (about 2.1 MPag), or from about 150 psig (about 1.0 MPag) to about 350 psig (about 2.0 MPag); and a hydrogen treat gas rate from about 500 scf/bbl to about 5000 scf/bbl (about 85 Nm³/m³ to about 850 Nm³/m³), *e.g.*, from about 750 scf/bbl to about 3000 scf/bbl (about 130 Nm³/m³ to about 510 Nm³/m³), from about 750 scf/bbl to about 2500 scf/bbl (about 130 Nm³/m³ to about 470 Nm³/m³), from about 900 scf/bbl to about 2500 scf/bbl (about 150 Nm³/m³ to about 470 Nm³/m³), or from about 1000 scf/bbl to about 3000 scf/bbl (about 170 Nm³/m³ to about 510 Nm³/m³).

In a preferred embodiment, the deoxygenation step, whether simultaneous with or initial to the dewaxing step, can be conducted to achieve an oxygen content of less than 100 wppm (*e.g.,* less than 75 wppm, less than 50 wppm, less than 40 wppm, less than 30 wppm, less than 25 wppm, less than 20 wppm, less than 15 wppm, less than 10 wppm, or less than 5 wppm) and/or to reduce the oxygen content by at least 95% by weight (*e.g.,* at least 97% by weight, at least 98% by weight, at least 99% by weight, at least 99.5% by weight, at least 99.9% by weight, at least 99.95% by weight, or at least 99.99% by weight).

Dewaxing processes can advantageously result in reduction/removal of longer-chain saturated hydrocarbons, which are commonly called waxes. Dewaxing can take two forms - a hydrocracking form, where such longer-chain saturated hydrocarbon wax molecules are broken, or cracked, to form shorter-chain saturated hydrocarbons that no longer exhibit the crystallization, for example, of waxes; and an isomerization form, where longer-chain saturated hydrocarbon wax molecules are rearranged (isomerized) to yield roughly similarly sized hydrocarbon chains that have hydrocarbon branches, which hydrocarbon branches thus disrupt the crystallization that waxes would otherwise experience. In the instant invention, it can be preferred to utilize a dewaxing catalyst (and thus a dewaxing process) that can dewax mostly (*e.g.,* as much as possible or almost completely) via isomerization mechanisms and sparingly (*e.g.,* as little as possible or almost not at all) via cracking mechanisms. Particularly in such preferred embodiments, this can enable the use of the raw renewable component oils whose molecules exhibit relatively lower carbon numbers (lack of cracking means smaller molecules can be used without the product having too low a carbon number to be useful in the desired application). In alternate embodiments, where significant dewaxing via cracking mechanisms is catalyzed, the raw renewable component oils containing relatively higher carbon numbers may need to be used.

Thus, in one embodiment, the catalyst itself and/or the catalyst support material used in the isomerization step of this invention can have an alpha value of less than 100, *e.g.,* less than 75, less than 60, less than 50, less than 40, less than 30, or less than 20. The alpha value is an approximate indication of the catalytic cracking activity of the catalyst compared to a standard catalyst. The alpha test can give the relative rate constant (rate of normal hexane conversion per volume of catalyst per unit time) of the test catalyst relative to the standard catalyst which is taken as an alpha of 1 (Rate Constant = 0.016 sec⁻¹). The alpha test is described in U.S. Patent No. 3,354,078 and in J. Catalysis, 4, 527 (1965); 6, 278 (1966); and 61, 395 (1980), to which reference is made for a description of the test. The experimental conditions of the test used to determine the alpha values referred to in this specification include a constant temperature of 538°C and a variable flow rate as described in detail in J. Catalysis, 61, 395 (1980).

Additionally or alternatively, the dewaxing catalyst support materials can include zeolitic supports exhibiting a 1-dimensional 10-ring pore structure. Further additionally or alternatively, the dewaxing catalyst support materials can include, but are not limited to, zeolite beta, zeolite Y, ultrastable zeolite Y, dealuminized zeolite Y, ZBM-30, ZSM-22, ZSM-23, ZSM-35, ZSM-48, SAPO-11, SAPO-5, MeAPO-11, MeAPO-5, MCM-41, MCM-48, and combinations and intergrowths thereof.

Catalysts useful in the dewaxing (isomerization) step according to the invention can also contain one or more hydrogenation metals, which can be one or more noble metals, one or more non-noble metals, or a combination thereof. Suitable noble metals include noble metals from Groups 8-10 of the Periodic Table of Elements, such as platinum and other members of the platinum group, such as iridium, palladium, ruthenium, rhodium, and combinations thereof. Suitable non-noble metals include those of Groups 6 and 8-10 of the Periodic Table, such as chromium, molybdenum, tungsten, cobalt, nickel, and combinations thereof (including cobalt-molybdenum, nickel-tungsten, nickel-molybdenum, cobalt-nickel-molybdenum, nickel-molybdenum-tungsten, cobalt-molybdenum-tungsten, and cobalt-nickel-tungsten). The hydrogenation metal(s) may be present in a (collective) amount from about 0.3% to about 25%, based on the weight of the total dewaxing catalyst composition (*e.g.,* for noble metals, from about 0.3 wt% to about 2.0 wt% or from about 0.5 wt% to about 1.5 wt%; for non-noble metals, typically at least one Group 6 metal is combined with at least one metal from Groups 8-10, such that the combination of metals can be from about 3 wt% to about 25 wt% or from about 5 wt% to about 20 wt%).

The metal can be incorporated into the catalyst by any suitable method or combination of methods, such as by impregnation or ion exchange into the zeolite. The metal can be incorporated in the form of a cationic, anionic, or neutral complex. Cationic complexes of the type Pt(NH₃)₄⁺⁺ can be used for exchanging metals onto the zeolite. Anionic complexes such as the molybdate or metatungstate ions can also be useful for impregnating metals into the catalysts.

The deoxygenation and/or dewaxing catalyst(s), in some embodiments, can include a binder (or matrix) material. Binder materials, when present, can preferably comprise or be metal oxides. Non-limiting examples of metal oxide binders can include, but are not limited to, alumina, silica-alumina, silica-magnesia, silica-zironcia, silica-thoria, silica-berylia, silica-titania, as well as ternary compositions such as silica-alumina-thoria, silica-alumina-zirconia, silica-alumina-magnesia, and silica-magnesia-zirconia, and combinations thereof. When binders are present, the catalyst material can be formed into a useable shape by methods such as extrusion and/or tabletting.

The dewaxing (isomerization) reaction can be carried out in the presence of an H₂-containing gas under conditions of elevated temperature and pressure, which, for relatively severe isomerization in order to obtain relatively highly isomerized renewable product, can be particularly elevated (as well as using particular types of catalyst(s) in tandem therewith). If conducted simultaneously with the deoxygenation step and/or if dewaxing and deoxygenation are conducted in separate zones of a single reactor, the conditions in the dewaxing step can be substantially the same as in the deoxygenation step (or vice versa).

Conditions under which the isomerization process of the present invention can be carried out can include: an LHSV of the input stream from about 0.1 hr⁻¹ to about 20 hr⁻¹, *e.g.,* from about 0.5 hr⁻¹ to about 1.5 hr⁻¹ or from about 2 hr⁻¹ to about 20 hr⁻¹; a weight average bed temperature or an estimated internal temperature (WABT or EIT, abbreviated herein as "temperature") from about 600°F to about 750°F (about 315°C to about 399°C), *e.g.,* from about 600°F to about 700°F (about 315°C to about 371°C), from about 600°F to about 675°F (about 315°C to about 357°C), from about 600°F to about 650°F (about 315°C to about 343°C), from about 625°F to about 750°F (about 329°C to about 399°C), from about 625°F to about 700°F (about 329°C to about 371°C), from about 625°F to about 675°F (about 329°C to about 357°C), from about 650°F to about 750°F (about 343°C to about 399°C), or from about 650°F to about 700°F (about 343°C to about 371°C); a hydrogen partial pressure from 1.7 atm to 204 atm (25 psia to 3000 psia, or 170 kPaa to 20.7 MPaa), for example 6.8 atm to 170 atm (100 psia to 2500 psia, or 1.4 MPaa to 17.3 MPaa); and a hydrogen treat gas rate from about 500 scf/bbl to about 5000 scf/bbl (about 85 Nm³/m³ to about 850 Nm³/m³), *e.g.,* from about 750 scf/bbl to about 3000 scf/bbl (about 130 Nm³/m³ to about 510 Nm³/m³), from about 750 scf/bbl to about 2500 scf/bbl (about 130 Nm³/m³ to about 470 Nm³/m³), from about 900 scf/bbl to about 2500 scf/bbl (about 150 Nm³/m³ to about 470 Nm³/m³), or from about 1000 scf/bbl to about 3000 scf/bbl (about 170 Nm³/m³ to about 510 Nm³/m³).

The H₂-containing gas introduced into both the deoxygenation and dewaxing (isomerization) reactors/zones can preferably contain more than 50 vol% hydrogen, *e.g.,* at least about 75 vol%, at least about 80 vol%, at least about 85 vol%, at least about 90 vol%, or at least about 95 vol%.

Generally, the raw renewable oil/fat compositions/components for deoxygenation and dewaxing can include vegetable fats/oils, animal fats/oils, fish oils, oils/biomass extracted from fungus/bacteria, and algae lipids/oils, as well as separated portions of such materials. Examples of vegetable oils that can be used in accordance with this invention include, but are not limited to rapeseed (canola) oil, soybean oil, coconut oil, sunflower oil, palm oil, palm kernel oil, peanut oil, linseed oil, tall oil, corn oil, castor oil, jatropha oil, jojoba oil, olive oil, flaxseed oil, camelina oil, safflower oil, cuphera oil, babassu oil, tallow oil, and rice bran oil. In the processes of the present invention, coconut, palm, palm kernel, cuphera, and babassu oils can be preferred, particularly in circumstances where the dewaxing process is desired to predominantly cause isomerization and to cause minimal cracking (*e.g.,* because their raw product contains relatively shorter carbon number chains than many other such oils).

Algal sources for algae oils can include, but are not limited to, unicellular and multicellular algae. Examples of such algae can include a rhodophyte, chlorophyte, heterokontophyte, tribophyte, glaucophyte, chlorarachniophyte, euglenoid, haptophyte, cryptomonad, dinoflagellum, phytoplankton, and combinations thereof. In one embodiment, algae can be of the classes Chlorophyceae and/or Haptophyta. Specific species can include, but are not limited to, *Neochloris oleoabundans, Scenedesmus dimorphus, Euglena gracilis, Phaeodactylum tricornutum, Pleurochrysis carterae, Prymnesium parvum, Tetraselmis chui,* and *Chlamydomonas reinhardtii.* Additional or alternate algal sources can include one or more microalgae of the *Achnanthes, Amphiprora, Amphora, Ankistrodesmus, Asteromonas, Boekelovia, Borodinella, Botryococcus, Bracteococcus, Chaetoceros, Carteria, Chlamydomonas, Chlorococcum, Chlorogonium, Chlorella, Chroomonas, Chrysosphaera, Cricosphaera, Crypthecodinium, Cryptomonas, Cyclotella, Dunaliella, Ellipsoidon, Emiliania, Eremosphaera, Ernodesmius, Euglena, Franceia, Fragilaria, Gloeothamnion, Haematococcus, Halocafeteria, Hymenomonas, Isochrysis, Lepocinclis, Micractinium, Monoraphidium, Nannochloris, Nannochloropsis, Navicula, Neochloris, Nephrochloris, Nephroselmis, Nitzschia, Ochromonas, Oedogonium, Oocystis, Ostreococcus, Pavlova, Parachlorella, Pascheria, Phaeodactylum, Phagus, Pichochlorum, Pseudoneochloris, Pseudostaurastrum, Platymonas, Pleurochrysis, Pleurococcus, Prototheca, Pseudochlorella, Pyramimonas, Pyrobotrys, Scenedesmus, Schizochlamydella, Skeletonema, Spyrogyra, Stichococcus, Tetrachlorella, Tetraselmis, Thalassiosira, Tribonema, Vaucheria, Viridiella,* and *Volvox* species, and/or one or more cyanobacteria of the *Agmenellum, Anabaena, Anabaenopsis, Anacystis, Aphanizomenon, Arthrospira, Asterocapsa, Borzia, Calothrix, Chamaesiphon, Chlorogloeopsis, Chroococcidiopsis, Chroococcus, Crinalium, Cyanobacterium, Cyanobium, Cyanocystis, Cyanospira, Cyanothece, Cylindrospermopsis, Cylindrospermum, Dactylococcopsis, Dermocarpella, Fischerella, Fremyella, Geitleria, Geitlerinema, Gloeobacter, Gloeocapsa, Gloeothece, Halospirulina, Iyengariella, Leptolyngbya, Limnothrix, Lyngbya, Microcoleus, Microcystis, Myxosarcina, Nodularia, Nostoc, Nostochopsis, Oscillatoria, Phormidium, Planktothrix, Pleurocapsa, Prochlorococcus, Prochloron, Prochlorothrix, Pseudanabaena, Rivularia, Schizothrix, Scytonema, Spirulina, Stanieria, Starria, Stigonema, Symploca, Synechococcus, Synechocystis, Tolypothrix, Trichodesmium, Tychonema,* and *Xenococcus* species.

In a preferred embodiment, the dewaxing step, whether simultaneous with or subsequent to the deoxygenation step, can be conducted under conditions sufficient to achieve an isoparaffin to normal paraffin ratio from about 2:1 to about 6:1 *(e.g.,* from about 2:1 to about 5:1, from about 2:1 to about 4:1, from about 2:1 to about 3:1, from about 3:1 to about 6:1, from about 3:1 to about 5:1, from about 3:1 to about 4:1, from about 4:1 to about 6:1 from about 4:1 to about 5:1, or from about 5:1 to about 6:1) and/or an aromatics content less than about 10 vol% *(e.g.,* less than about 5 vol%, less than about 4 vol%, less than about 3 vol%, less than about 2 vol%, less than about 1 vol%, less than about 0.5 vol%, less than about 0.3 vol%, or less than about 0.1 vol%).

Either taking a renewable component that has been provided to have the requisite deoxygenation and isomerization or having conducted the requisite reactions to obtain the renewable product, from 3 vol% to 25 vol% (*e.g.,* from about 5 vol% to about 20 vol% or from about 10 vol% to about 20 vol%) of the renewable component/product can be blended with from 75 vol% to 97 vol% (*e.g.,* from about 80 vol% to about 95 vol% or from about 80 vol% to about 90 vol%) of the mineral-based distillate component to form an on-spec jet fuel composition.

The on-spec jet fuel composition has all the following enumerated properties: a final boiling point of at most 300°C a freezing point of at most -40°C; a smoke point of at least 18 mm; a naphthalene content of at most 3.0 vol%; a JFTOT VTR rating passing the jet fuel specification; and a sulfur content of at most 3000 wppm.

Another aspect outside of the invention relates to a method of making a jet fuel composition comprising a first step of providing a mineral-based jet-type distillate component having a smoke point of at least about 19.2 mm (*e.g.,* at least about 19.5 mm, at least about 20 mm, at least about 20.5 mm, or at least about 21 mm; additionally or alternatively, the smoke point can be no more than about 26 mm, such as no more than about 25 mm, no more than about 24 mm, no more than about 23 mm, no more than about 22 mm, no more than about 21.5 mm, no more than about 21 mm, no more than about 20.5 mm, or no more than about 20 mm).

The method can comprise a second step of blending from about 2 vol% to about 20 vol% of a heavy cat naphtha (*e.g.,* from about 2 vol% to about 18 vol%, from about 2 vol% to about 15 vol%, from about 2 vol% to about 13 vol%, from about 2 vol% to about 12 vol%, from about 2 vol% to about 11 vol%, from about 2 vol% to about 10 vol%, from about 2 vol% to about 9 vol%, from about 2 vol% to about 8 vol%, from about 2 vol% to about 7 vol%, from about 2 vol% to about 6 vol%, from about 2 vol% to about 5 vol%, from about 2 vol% to about 4 vol%, from about 4 vol% to about 20 vol%, from about 4 vol% to about 18 vol%, from about 4 vol% to about 15 vol%, from about 4 vol% to about 13 vol%, from about 4 vol% to about 12 vol%, from about 4 vol% to about 11 vol%, from about 4 vol% to about 10 vol%, from about 4 vol% to about 9 vol%, from about 4 vol% to about 8 vol%, from about 4 vol% to about 7 vol%, from about 4 vol% to about 6 vol%, from about 5 vol% to about 20 vol%, from about 5 vol% to about 18 vol%, from about 5 vol% to about 15 vol%, from about 5 vol% to about 13 vol%, from about 5 vol% to about 12 vol%, from about 5 vol% to about 11 vol%, from about 5 vol% to about 10 vol%, from about 5 vol% to about 9 vol%, from about 5 vol% to about 8 vol%, from about 5 vol% to about 7 vol%, from about 5 vol% to about 6 vol%, from about 6 vol% to about 20 vol%, from about 6 vol% to about 18 vol%, from about 6 vol% to about 15 vol%, from about 6 vol% to about 13 vol%, from about 6 vol% to about 12 vol%, from about 6 vol% to about 11 vol%, from about 6 vol% to about 10 vol%, from about 6 vol% to about 9 vol%, from about 6 vol% to about 8 vol%, from about 6 vol% to about 7 vol%, from about 7 vol% to about 20 vol%, from about 7 vol% to about 18 vol%, from about 7 vol% to about 15 vol%, from about 7 vol% to about 13 vol%, from about 7 vol% to about 12 vol%, from about 7 vol% to about 11 vol%, from about 7 vol% to about 10 vol%, from about 7 vol% to about 9 vol%, from about 7 vol% to about 8 vol%, from about 8 vol% to about 20 vol%, from about 8 vol% to about 18 vol%, from about 8 vol% to about 15 vol%, from about 8 vol% to about 13 vol%, from about 8 vol% to about 12 vol%, from about 8 vol% to about 11 vol%, from about 8 vol% to about 10 vol%, from about 8 vol% to about 9 vol%, from about 9 vol% to about 20 vol%, from about 9 vol% to about 18 vol%, from about 9 vol% to about 15 vol%, from about 9 vol% to about 13 vol%, from about 9 vol% to about 12 vol%, from about 9 vol% to about 11 vol%, from about 9 vol% to about 10 vol%, from about 10 vol% to about 20 vol%, from about 10 vol% to about 18 vol%, from about 10 vol% to about 15 vol%, from about 10 vol% to about 13 vol%, from about 10 vol% to about 12 vol%, from about 10 vol% to about 11 vol%, from about 11 vol% to about 20 vol%, from about 11 vol% to about 18 vol%, from about 11 vol% to about 15 vol%, from about 11 vol% to about 13 vol%, or from about 11 vol% to about 12 vol%) with from about 80 vol% to about 98 vol% of the mineral-based jet-type distillate component (*e.g.,* from about 80 vol% to about 96 vol%, from about 80 vol% to about 95 vol%, from about 80 vol% to about 94 vol%, from about 80 vol% to about 93 vol%, from about 80 vol% to about 92 vol%, from about 80 vol% to about 91 vol%, from about 80 vol% to about 90 vol%, from about 80 vol% to about 89 vol%, from about 80 vol% to about 88 vol%, from about 80 vol% to about 87 vol%, from about 80 vol% to about 85 vol%, from about 80 vol% to about 82 vol%, from about 82 vol% to about 98 vol%, from about 82 vol% to about 96 vol%, from about 82 vol% to about 95 vol%, from about 82 vol% to about 94 vol%, from about 82 vol% to about 93 vol%, from about 82 vol% to about 92 vol%, from about 82 vol% to about 91 vol%, from about 82 vol% to about 90 vol%, from about 82 vol% to about 89 vol%, from about 82 vol% to about 88 vol%, from about 82 vol% to about 87 vol%, from about 82 vol% to about 85 vol%, from about 85 vol% to about 98 vol%, from about 85 vol% to about 96 vol%, from about 85 vol% to about 95 vol%, from about 85 vol% to about 94 vol%, from about 85 vol% to about 93 vol%, from about 85 vol% to about 92 vol%, from about 85 vol% to about 91 vol%, from about 85 vol% to about 90 vol%, from about 85 vol% to about 89 vol%, from about 85 vol% to about 88 vol%, from about 85 vol% to about 87 vol%, from about 87 vol% to about 98 vol%, from about 87 vol% to about 96 vol%, from about 87 vol% to about 95 vol%, from about 87 vol% to about 94 vol%, from about 87 vol% to about 93 vol%, from about 87 vol% to about 92 vol%, from about 87 vol% to about 91 vol%, from about 87 vol% to about 90 vol%, from about 87 vol% to about 89 vol%, from about 87 vol% to about 88 vol%, from about 88 vol% to about 98 vol%, from about 88 vol% to about 96 vol%, from about 88 vol% to about 95 vol%, from about 88 vol% to about 94 vol%, from about 88 vol% to about 93 vol%, from about 88 vol% to about 92 vol%, from about 88 vol% to about 91 vol%, from about 88 vol% to about 90 vol%, from about 88 vol% to about 89 vol%, from about 89 vol% to about 98 vol%, from about 89 vol% to about 96 vol%, from about 89 vol% to about 95 vol%, from about 89 vol% to about 94 vol%, from about 89 vol% to about 93 vol%, from about 89 vol% to about 92 vol%, from about 89 vol% to about 91 vol%, from about 89 vol% to about 90 vol%, from about 90 vol% to about 98 vol%, from about 90 vol% to about 96 vol%, from about 90 vol% to about 95 vol%, from about 90 vol% to about 94 vol%, from about 90 vol% to about 93 vol%, from about 90 vol% to about 92 vol%, from about 90 vol% to about 91 vol%, from about 91 vol% to about 98 vol%, from about 91 vol% to about 96 vol%, from about 91 vol% to about 95 vol%, from about 91 vol% to about 94 vol%, from about 91 vol% to about 93 vol%, from about 91 vol% to about 92 vol%, from about 92 vol% to about 98 vol%, from about 92 vol% to about 96 vol%, from about 92 vol% to about 95 vol%, from about 92 vol% to about 94 vol%, from about 92 vol% to about 93 vol%, from about 93 vol% to about 98 vol%, from about 93 vol% to about 96 vol%, from about 93 vol% to about 95 vol%, from about 93 vol% to about 94 vol%, from about 94 vol% to about 98 vol%, from about 94 vol% to about 96 vol%, from about 94 vol% to about 95 vol%, or from about 96 vol% to about 98 vol%) to form a jet-type blend having a smoke point no more than 19.0 mm (*e.g.,* no more than about 18.7 mm, no more than about 18.5 mm, no more than about 18.3 mm, no more than about 18.0 mm, no more than about 17.7 mm, no more than about 17.5 mm, no more than about 17.3 mm, or no more than about 17.0 mm).

The method can optionally include a third step of providing a hydrotreated renewable component derived from vegetable oil, which renewable component typically comprises triglycerides and/or fatty acids and has an aromatics content less than about 5 vol% (*e.g.,* less than about 4 vol%, less than about 3 vol%, less than about 2 vol%, less than about 1 vol%, less than about 0.7 vol%, less than about 0.5 vol%, less than about 0.3 vol%, less than about 0.1 vol%, or less than about 0.05 vol%).

The method can also include blending from about 5 vol% to about 20 vol% of the jet-type blend (*e.g.,* from about 5 vol% to about 18 vol%, from about 5 vol% to about 15 vol%, from about 5 vol% to about 13 vol%, from about 5 vol% to about 12 vol%, from about 5 vol% to about 11 vol%, from about 5 vol% to about 10 vol%, from about 5 vol% to about 9 vol%, from about 5 vol% to about 8 vol%, from about 5 vol% to about 7 vol%, from about 5 vol% to about 6 vol%, from about 6 vol% to about 20 vol%, from about 6 vol% to about 18 vol%, from about 6 vol% to about 15 vol%, from about 6 vol% to about 13 vol%, from about 6 vol% to about 12 vol%, from about 6 vol% to about 11 vol%, from about 6 vol% to about 10 vol%, from about 6 vol% to about 9 vol%, from about 6 vol% to about 8 vol%, from about 6 vol% to about 7 vol%, from about 7 vol% to about 20 vol%, from about 7 vol% to about 18 vol%, from about 7 vol% to about 15 vol%, from about 7 vol% to about 13 vol%, from about 7 vol% to about 12 vol%, from about 7 vol% to about 11 vol%, from about 7 vol% to about 10 vol%, from about 7 vol% to about 9 vol%, from about 7 vol% to about 8 vol%, from about 8 vol% to about 20 vol%, from about 8 vol% to about 18 vol%, from about 8 vol% to about 15 vol%, from about 8 vol% to about 13 vol%, from about 8 vol% to about 12 vol%, from about 8 vol% to about 11 vol%, from about 8 vol% to about 10 vol%, from about 8 vol% to about 9 vol%, from about 9 vol% to about 20 vol%, from about 9 vol% to about 18 vol%, from about 9 vol% to about 15 vol%, from about 9 vol% to about 13 vol%, from about 9 vol% to about 12 vol%, from about 9 vol% to about 11 vol%, from about 9 vol% to about 10 vol%, from about 10 vol% to about 20 vol%, from about 10 vol% to about 18 vol%, from about 10 vol% to about 15 vol%, from about 10 vol% to about 13 vol%, from about 10 vol% to about 12 vol%, from about 10 vol% to about 11 vol%, from about 11 vol% to about 20 vol%, from about 11 vol% to about 18 vol%, from about 11 vol% to about 15 vol%, from about 11 vol% to about 13 vol%, or from about 11 vol% to about 12 vol%, from about 12 vol% to about 20 vol%, from about 12 vol% to about 18 vol%, from about 12 vol% to about 15 vol%, from about 12 vol% to about 13 vol%, from about 13 vol% to about 20 vol%, from about 13 vol% to about 15 vol%, or from about 15 vol% to about 20 vol%) with from about 80 vol% to about 95 vol% of the hydrotreated vegetable oil (*e.g.,* from about 80 vol% to about 94 vol%, from about 80 vol% to about 93 vol%, from about 80 vol% to about 92 vol%, from about 80 vol% to about 91 vol%, from about 80 vol% to about 90 vol%, from about 80 vol% to about 89 vol%, from about 80 vol% to about 88 vol%, from about 80 vol% to about 87 vol%, from about 80 vol% to about 85 vol%, from about 80 vol% to about 82 vol%, from about 82 vol% to about 95 vol%, from about 82 vol% to about 94 vol%, from about 82 vol% to about 93 vol%, from about 82 vol% to about 92 vol%, from about 82 vol% to about 91 vol%, from about 82 vol% to about 90 vol%, from about 82 vol% to about 89 vol%, from about 82 vol% to about 88 vol%, from about 82 vol% to about 87 vol%, from about 82 vol% to about 85 vol%, from about 85 vol% to about 95 vol%, from about 85 vol% to about 94 vol%, from about 85 vol% to about 93 vol%, from about 85 vol% to about 92 vol%, from about 85 vol% to about 91 vol%, from about 85 vol% to about 90 vol%, from about 85 vol% to about 89 vol%, from about 85 vol% to about 88 vol%, from about 85 vol% to about 87 vol%, from about 87 vol% to about 95 vol%, from about 87 vol% to about 94 vol%, from about 87 vol% to about 93 vol%, from about 87 vol% to about 92 vol%, from about 87 vol% to about 91 vol%, from about 87 vol% to about 90 vol%, from about 87 vol% to about 89 vol%, from about 87 vol% to about 88 vol%, from about 88 vol% to about 95 vol%, from about 88 vol% to about 94 vol%, from about 88 vol% to about 93 vol%, from about 88 vol% to about 92 vol%, from about 88 vol% to about 91 vol%, from about 88 vol% to about 90 vol%, from about 88 vol% to about 89 vol%, from about 89 vol% to about 95 vol%, from about 89 vol% to about 94 vol%, from about 89 vol% to about 93 vol%, from about 89 vol% to about 92 vol%, from about 89 vol% to about 91 vol%, from about 89 vol% to about 90 vol%, from about 90 vol% to about 95 vol%, from about 90 vol% to about 94 vol%, from about 90 vol% to about 93 vol%, from about 90 vol% to about 92 vol%, from about 90 vol% to about 91 vol%, from about 91 vol% to about 95 vol%, from about 91 vol% to about 94 vol%, from about 91 vol% to about 93 vol%, from about 91 vol% to about 92 vol%, from about 92 vol% to about 95 vol%, from about 92 vol% to about 94 vol%, from about 92 vol% to about 93 vol%, from about 93 vol% to about 95 vol%, from about 93 vol% to about 94 vol%, or from about 94 vol% to about 95 vol%) component. This blending step can advantageously form a jet fuel composition having a smoke point of at least 19 mm (*e.g.,* at least about 19.3 mm, at least about 19.5 mm, at least about 19.6 mm, at least about 19.7 mm, at least about 19.8 mm, at least about 19.9 mm, or at least about 20.0 mm; additionally or alternatively, the smoke point can be no more than about 26 mm, such as no more than about 25 mm, no more than about 24 mm, no more than about 23 mm, no more than about 22 mm, no more than about 21.5 mm, no more than about 21 mm, no more than about 20.5 mm, no more than about 20 mm, or no more than about 19.8 mm) and at least 0.5 mm (*e.g.,* at least 0.8 mm or at least 1.0 mm) higher than the smoke point of the jet-type blend, as well as one or more (*e.g.,* at least two, at least three, at least four, or all) of the following enumerated properties: a final boiling point of at most 300°C or at least 7°C below a final boiling point of the jet-type blend alone; a freezing point of at most -40°C or at least 4°C less than a freezing point of the jet-type blend alone; a naphthalene content of at most 3.0 vol% or at least 0.3 vol% lower than a naphthalene content of the jet-type blend alone; a JFTOT VTR rating passing the jet fuel specification; and a sulfur content of at most 3000 wppm or at least 150 wppm less than a sulfur content of the jet-type blend alone.

Optionally but preferably, where the jet fuel composition has a smoke point of at least 19.5 mm, an additional amount from about 0.5 vol% to about 3 vol% of heavy cat naphtha may be blended with the jet fuel composition to form a modified jet fuel composition having a smoke point between 19.0 mm and 19.2 mm, as well as all of a final boiling point of at most 300°C, a freezing point of at most -40°C, a naphthalene content of at most 3.0 vol%, a JFTOT VTR rating passing the jet fuel specification, and a sulfur content of at most 3000 wppm.

Although heavy cat naphtha (HCN) is specifically disclosed to be used in this aspect of the invention, it should be understood that HCN may be partially or wholly replaced with additional or alternative components subject to a hydrocracking process.

Demand for distillate fuel components may increase in the future, particularly relative to gasoline. In order to accommodate this anticipated additional demand, it could be beneficial to be able to produce distillate fuel components from feedstocks conventionally used for gasoline production. Waxy heavy atmospheric gas oils are one type of hydrocracking feed that could be switched from gasoline production to distillate component production, *e.g.,* for alternatively purposed usage in (modified) jet fuel compositions such as those according to the invention. Conventionally, waxy heavy atmospheric gas oils are often used cracked to produce a heavy cat naphtha (HCN) that can be used in gasoline, due to the high cloud point of the gas oil and/or to the difficulty in achieving relatively deep desulfurization of the gas oil. The nature of certain impurities (*e.g.,* sulfur- and/or nitrogen- containing molecules) in the gas oil can require relatively severe hydrocracking/hydrotreating conditions to mitigate. For instance, suitable feedstocks for hydrocracking processes can include gas oils produced by the distillation of crude oil at approximately atmospheric pressure. A crude oil distillation tower can generally produce several grades of atmospheric gas oils - for example, atmospheric and/or vacuum gas oils can be used as a feedstock to a fluid catalytic cracking (FCC) process to create an HCN component according to the invention.

Any type of reactor suitable for hydrocracking can be used to carry out the any of the hydrocracking stages in the processes according to the invention. Examples of such reactors can include, but are not limited to, trickle bed, ebullating bed, moving bed, fluidized bed, and slurry reactors.

Hydrocracking can often be interchangeably described with catalytic dewaxing, with catalytic dewaxing usually involving both selective cracking and hydroisomerization of the feedstock. Hydrocracking catalysts can comprise molecular sieves such as crystalline aluminosilicates (zeolites) or silicoaluminophosphates (SAPOs). Additionally or alternately, the molecular sieve can be a 1-D or 3-D molecular sieve, for example a 10-member ring 1-D molecular sieve. Examples of molecular sieves useful for hydrocracking can include, but are not limited to, ZSM-48, ZSM-22, ZSM-23, ZSM-35, zeolite Beta, ZSM-5, zeolite X, zeolite Y, faujasite, ultrastable Y (USY), dealuminized Y (Deal Y), Mordenite, ZSM-3, ZSM-4, ZSM-18, ZSM-20, and combinations thereof. Optionally, the cracking catalyst can include a binder, such as alumina, titania, silica, silica-alumina, zirconia, or a combination thereof, for example alumina and/or titania, or one or more of titania, silica, and zirconia. Additionally or alternately, a portion of the cracking catalyst can comprise or be a catalyst that can simultaneously be used for hydrotreatment (hydrodenitrogenation and/or hydrodesulfurization).

One feature of molecular sieves that can impact the cracking activity of the molecular sieve includes the ratio of silica to alumina (Si/Al₂) in the molecular sieve. For instance, the molecular sieve can have a silica to alumina ratio of about 200:1 or less, for example about 120:1 or less, about 100:1 or less, about 90:1 or less, or about 75:1 or less. Additionally or alternately, the molecular sieve can have a silica to alumina ratio of at least about 30:1, for example at least about 50:1 or at least about 65:1.

Aside from the molecular sieve component, the cracking catalyst can also typically include a metal hydrogenation component, such as a Group VIII metal. Suitable Group VIII metals can include Pt, Pd, Ni, or combinations thereof. The cracking catalyst can include at least about 0.1 wt% of the Group VIII metal(s), for example at least about 0.3 wt%, at least about 0.5 wt%, at least about 1.0 wt%, at least about 2.5 wt%, or at least about 5.0 wt%. Additionally or alternately, the cracking catalyst can include about 10.0 wt% or less of the Group VIII metal(s), for example about 5.0 wt% or less, about 2.5 wt% or less, about 1.5 wt% or less, or about 1.0 wt% or less.

In some embodiments, particularly those where hydrotreatment and/or dewaxing activity is simultaneously desired, the cracking catalyst can include as an additional hydrogenation component at least one Group VIB metal, such as W and/or Mo. Such Group VIB metals can typically be used in conjunction with the at least one Group VIII metal, such as Ni and/or Co. An example of such an embodiment could be a cracking catalyst that includes NiW, NiMo, or NiMoW. When present, the dewaxing catalyst can include at least about 0.5 wt% of the Group VIB metal(s), for example at least about 1.0 wt%, at least about 2.5 wt%, or at least about 5.0 wt%. Additionally or alternately, such cracking catalysts can include about 20.0 wt% or less of the Group VIB metal(s), for example about 15.0 wt% or less, about 10.0 wt% or less, about 5.0 wt% or less, or about 1.0 wt% or less. Where the cracking catalyst contains only Group VIII metals, however, Pt and/or Pd can be preferred Group VIII metal(s).

The catalysts in any of the hydroprocessing stages according to the processes of the invention may optionally contain additional components, such as other transition metals (*e.g.,* Group V metals such as niobium), rare earth metals, organic ligands (*e.g.,* as added or as precursors left over from oxidation and/or sulfidization steps), phosphorus compounds, boron compounds, fluorine-containing compounds, silicon-containing compounds, promoters, binders, fillers, or combinations thereof. The Groups referred to herein refer to Groups of the CAS Version as found in the Periodic Table of the Elements in Hawley's Condensed Chemical Dictionary, 13th Edition.

In certain embodiments, the hydrocracking of the feedstream (such as a vacuum gas oil) can be accomplished to relatively high-conversion by contacting the feedstream with a hydrogen-containing treat gas stream in the presence of a hydrocracking catalyst under effective hydrocracking conditions (*e.g.,* sufficient to attain a conversion level of greater than 40%, such as greater than 45%, greater than 50%, greater than 55%, greater than 60%, or greater than 65%) so as to form a hydrocracked product, followed by separation of the hydrocracked product into a converted product having a boiling range maximum of about 700°F (about 371 °C) and an unconverted product having a boiling range minimum of about 700°F (about 371 °C). Advantageously, the converted product can be used for blending with a jet-type distillate component and can, in some embodiments, exhibit a cetane number of at least 40 (for example at least 45) and/or a sulfur content of not greater than 20 wppm (for example, not greater than 15 wppm).

In certain embodiments, the hydrocracking conditions can be sufficient to attain a conversion level of at least about 60%, for example at least about 65%, at least about 70%, at least about 75%, at least about 80%, at least about 85%, or at least about 90%. Additionally or alternatively, the hydrocracking conditions can be sufficient to attain a conversion level of not more than about 99%, for example not more than about 97%, not more than about 95%, not more than about 90%, not more than about 85%, not more than about 80%, or not more than about 75%. Further additionally or alternately, the hydrocracking conditions can be sufficient to attain a conversion level from about 55% to about 99%, for example from about 55% to about 75%, from about 60% to about 95%, or from about 60% to about 80%. As used herein, the term "conversion level," with reference to a feedstream being hydrocracked, means the relative amount of change in boiling point of the individual molecules in the feedstream from above 700°F (371°C) to 700°F (371°C) or below. Conversion level can be measured by any appropriate means and, for a feedstream whose minimum boiling point is at least 700.1°F (371.2°C), can represent the average proportion of material that has passed through the hydrocracking process and has a boiling point less than or equal to 700.0°F (371.1°C), compared to the total amount of hydrocracked material. The basic test method of determining the boiling points or ranges of such feedstock, as well as the fuel compositions produced according to this invention, can be by performing batch distillation according to ASTM D86-09e1, Standard Test Method for Distillation of Petroleum Products at Atmospheric Pressure.

Additionally or alternately, the converted hydrocracking product can exhibit a cetane number of at least 45, for example at least 50 or at least 51, and/or a sulfur content of not greater than 10 wppm, for example not greater than about 8 wppm, not greater than about 7 wppm, not greater than about 6 wppm, or not greater than about 5 wppm. Cetane number can be measured according to any appropriate measurement, *e.g.,* ASTM D 613.

In an embodiment, the effective hydrocracking conditions can comprise one or more of: a weight average bed temperature (WABT) from about 550°F (about 288°C) to about 800°F (about 427°C); a total pressure from about 300 psig (about 2.1 MPag) to about 3000 psig (about 20.7 MPag), for example from about 700 psig (about 4.8 MPag) to about 2000 psig (about 13.8 MPag); an LHSV from about 0.1 hr⁻¹ to about 20 hr⁻¹, for example from about 0.2 hr⁻¹ to about 10 hr⁻¹; and a hydrogen treat gas rate from about 500 scf/bbl (about 85 Nm³/m³) to about 10000 scf/bbl (about 1700 Nm³/m³), for example from about 750 scf/bbl (about 130 Nm³/m³) to about 7000 scf/bbl (about 1200 Nm³/m³) or from about 1000 scf/bbl (about 170 Nm³/m³) to about 5000 scf/bbl (about 850 Nm³/m³).

Treat gas, as referred to herein, can be either pure hydrogen or a hydrogen-containing gas, which contains hydrogen in an amount at least sufficient for the intended reaction purpose(s), optionally in addition to one or more other gases (*e.g.,* nitrogen, light hydrocarbons such as methane, and combinations thereof) that generally do not adversely interfere with or affect either the reactions or the products. Impurities, such as H2S and NH₃, are typically undesirable and would typically be removed from, or reduced to desirably low levels in, the treat gas before it is conducted to the reactor stage(s). The treat gas stream introduced into a reaction stage can preferably contain at least about 50 vol%, for example at least about 75 vol%, hydrogen.

Advantageously, the distillate yield from the hydrocracking step can be desirably relatively high. For instance, the converted hydrocracking product can have a yield of material boiling in the range between 350°F (177°C) and 700°F (371°C) of at least 40 wt%, for example at least 45 wt%, at least 50 wt%, at least 55 wt%, at least 60 wt%, at least 65 wt%, or at least 70 wt%, based on the weight of the entire hydrocracking feedstock.

Additionally or alternately, the present invention can include one or more of the following embodiments.

Embodiment 1. Use of a renewable component for making an on-spec jet fuel composition from an off-spec jet fuel wherein the off-spec jet fuel is a mineral-based kero/jet-type distillate component having an initial boiling point of at least 100°C and two or more of the following enumerated properties: a T90 boiling point from 260°C to 295°C; a final boiling point from 275°C to 300°C; a freezing point from -45°C to -20°C; a smoke point from 14 mm to 19 mm; a naphthalene content from 2.8 vol% to 3.5 vol%; a JFTOT VTR rating failing the jet fuel specification; and a sulfur content from 2000 wppm to 3500 wppm; wherein the renewable component is a deoxygenated and dewaxed renewable component derived from triglycerides and/or fatty acids and having an isoparaffin to normal paraffin ratio from 2:1 to 6:1 and an aromatics content less than 1 vol%; and wherein from 75 vol% to 97 vol% of the mineral-based distillate components is blended with from 3 vol% to 25 vol% of the renewable component to form a jet fuel composition, and wherein the on-spec jet fuel composition has all the following enumerated properties: a final boiling point of at most 300°C; a freezing point of at most -40°C; a smoke point of at least 18 mm; a naphthalene content of at most 3.0 vol%; a JFTOT VTR rating passing the jet fuel specification; and a sulfur content of at most 3000 wppm.

Embodiment 2. The use according to embodiment 1, wherein the mineral-based distillate composition has a T90 boiling point from 270°C to 285°C and a final boiling point from 285°C to 299°C.

Embodiment 3. The use according to embodiment 1, wherein the renewable component is prepared by a process that comprises: providing a raw renewable triglyceride and/or fatty acid composition having an oxygen content and wherein at least 85% of acyl chains have from 9 to 15 carbons; contacting the raw renewable composition with an H2-containing gas in the presence of a deoxygenation catalyst under conditions sufficient to achieve an oxygen content of less than 100 wppm and/or to reduce the oxygen content by at least 98% by weight; and simultaneously with or following the deoxygenation step, performing dewaxing by contacting with an H2-containing gas in the presence of a dewaxing catalyst under conditions sufficient to predominantly cause isomerization and to cause minimal cracking, such that the product of the dewaxing step has the requisite isoparaffin to normal paraffin ratio and aromatics content.

Embodiment 4. The use according to embodiment 3, wherein the deoxygenation and dewaxing steps are simultaneously performed using a single supported metal catalyst, in which an active metal component is disposed on a catalyst support.

Embodiment 5. The use according to embodiment 4, wherein the catalyst support comprises a zeolitic support exhibiting a 1-dimensional 10-ring pore structure.

Embodiment 6. The use according to embodiment 4 or embodiment 5, wherein the catalyst support comprises zeolite beta, zeolite Y, ultrastable zeolite Y, dealuminized zeolite Y, ZBM-30, ZSM-22, ZSM-23, ZSM-35, ZSM-48, MCM-41, MCM-48, or a combination or intergrowth thereof.

Embodiment 7. The use according to any one of embodiments 6-4-6, wherein the active metal component comprises a metal from Groups 8-10 of the Periodic Table of Elements, and optionally also comprises a metal from Group 6 of the Periodic Table of Elements.

Embodiment 8. The use according to embodiment 7, wherein the active metal component comprises a noble metal selected from the group consisting of platinum, palladium, ruthenium, and combinations thereof.

Embodiment 9. The use according to embodiment 7, wherein the active metal component comprises at least one of cobalt, nickel, and iron, and also comprises molybdenum and/or tungsten.

### EXAMPLE

A strong economic incentive exists in the winter season to add more cracked components to jet fuel, *e.g.,* to maximize distillate production at the expense of lower-value products. One example is the redirection of HCN from gasoline into jet fuel.

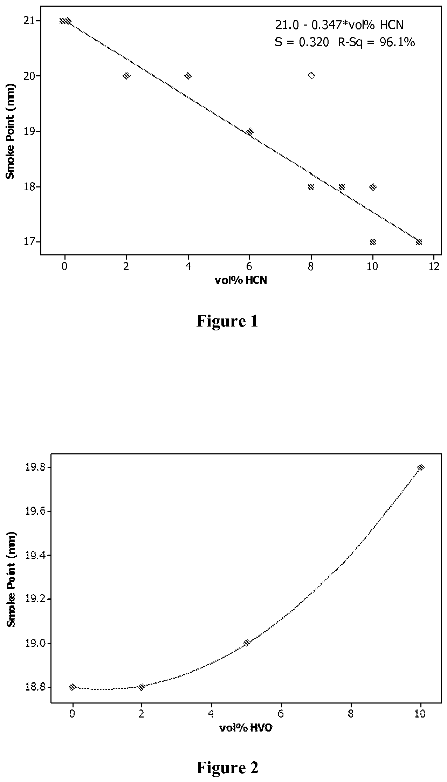

It has been found that blending up to ∼11.5 vol% HCN into a jet fuel composition with a smoke point of ∼21 mm appeared to reduce the smoke point for the blend roughly linearly to about 17 mm. The results from two sets of samples are shown in Figure 1.

Smoke point is currently measured by ASTM D 1322. However, smoke point measurement is often done with the traditional manual method described in D 1322, which is subjective with poor reproducibility. ASTM recently included and granted preferred status to an automated approach in D 1322, which provides objective smoke point measurement with a reproducibility as much as four times better than the manual method. The higher precision of the automated smoke point method can be beneficial when adding cracked components or HVO to jet fuel blends/compositions. In particular, the automated method can eliminate much of the smoke point margin required to ensure on-spec product with the more variable manual method and can facilitate the use of smoke point curves, such as shown in Figure 1 and Figure 2, to select the appropriate concentration of cracked component or HVO based on the measured and targeted smoke point of a jet fuel composition.

It was found that blending HVO into a jet fuel containing 8.0 vol% HCN appeared to increase its smoke point, as determined by the automated test method. The addition of ∼10.0 vol% HVO increased the smoke point by ∼1.0 mm, which allowed an additional ∼2.9 vol% HCN to be used in a modified jet fuel composition according to the relationship shown in Figure 1. Such an increase in use of HCN in jet fuel compositions can have a benefit estimated at as much as ∼$1.3M per year (excluding the cost of the HVO). The relationship between smoke point and HVO concentration for this Example system is shown in Figure 2.

## Claims

1. Use of a renewable component for making an on-spec jet fuel composition from an off-spec jet fuel
wherein the off-spec jet fuel is a mineral-based kero/jet-type distillate component having an initial boiling point of at least 100°C and two or more of the following enumerated properties: a T90 boiling point from 260°C to 295°C; a final boiling point from 275°C to 300°C; a freezing point from -45°C to -20°C; a smoke point from 14 mm to 19 mm; a naphthalene content from 2.8 vol% to 3.5 vol%; a JFTOT VTR rating failing the jet fuel specification; and a sulfur content from 2000 wppm to 3500 wppm;
wherein the renewable component is a deoxygenated and dewaxed renewable component derived from triglycerides and/or fatty acids and having an isoparaffin to normal paraffin ratio from 2:1 to 6:1 and an aromatics content less than 1 vol%;
wherein from 75 vol% to 97 vol% of the mineral-based distillate components is blended with from 3 vol% to 25 vol% of the renewable component to form the on-spec jet fuel composition, and
wherein the on-spec jet fuel composition has all the following enumerated properties:
a final boiling point of at most 300°C; a freezing point of at most -40°C; a smoke point of at least 18 mm; a naphthalene content of at most 3.0 vol%; a JFTOT VTR rating passing the jet fuel specification; and a sulfur content of at most 3000 wppm.

2. The use according to claim 1, wherein the mineral-based distillate composition has a T90 boiling point from 270°C to 285°C and a final boiling point from 285°C to 299°C.

3. The use according to claim 1, wherein the renewable component is prepared by a process that comprises:
providing a raw renewable triglyceride and/or fatty acid composition having an oxygen content and wherein at least 85% of acyl chains have from 9 to 15 carbons;
contacting the raw renewable composition with an H₂-containing gas in the presence of a deoxygenation catalyst under conditions sufficient to achieve an oxygen content of less than 100 wppm and/or to reduce the oxygen content by at least 98% by weight; and
simultaneously with or following the deoxygenation step, performing dewaxing by contacting with an H₂-containing gas in the presence of a dewaxing catalyst under conditions sufficient to predominantly cause isomerization and to cause minimal cracking, such that the product of the dewaxing step has the requisite isoparaffin to normal paraffin ratio and aromatics content.

4. The use according to claim 3, wherein the deoxygenation and dewaxing steps are simultaneously performed using a single supported metal catalyst, in which an active metal component is disposed on a catalyst support.

5. The use according to claim 4, wherein the catalyst support comprises a zeolitic support exhibiting a 1-dimensional 10-ring pore structure.

6. The use according to claim 4 or claim 5, wherein the catalyst support comprises zeolite beta, zeolite Y, ultrastable zeolite Y, dealuminized zeolite Y, ZBM-30, ZSM-22, ZSM-23, ZSM-35, ZSM-48, MCM-41, MCM-48, or a combination or intergrowth thereof.

7. The use according to any one of claims 4-6, wherein the active metal component comprises a metal from Groups 8-10 of the Periodic Table of Elements, and optionally also comprises a metal from Group 6 of the Periodic Table of Elements.

8. The use according to claim 7, wherein the active metal component comprises a noble metal selected from the group consisting of platinum, palladium, ruthenium, and combinations thereof.

9. The use according to claim 7, wherein the active metal component comprises at least one of cobalt, nickel, and iron, and also comprises molybdenum and/or tungsten.

## Patentansprüche

1. Verwendung einer erneuerbaren Komponente zur Herstellung einer spezifikationsgemäßen Kerosinzusammensetzung aus einem nicht spezifikationsgemäßen Kerosin,
wobei das nicht spezifikationsgemäße Kerosin eine auf Mineralöl basierte Kero/Jet-Typ-Destillatskomponente aufweist, die einen Anfangssiedepunkt von mindestens 100 °C und zwei oder mehr der folgenden aufgezählten Eigenschaften aufweist: einen T90-Siedepunkt von 260 °C bis 295 °C, einen Endsiedepunkt von 275 °C bis 300 °C, einen Gefrierpunkt von -45 °C bis -20 °C, einen Rauchpunkt von 14 mm bis 19 mm, einen Naphthalingehalt von 2,8 Vol.-% bis 3,5 Vol.-%, eine JFTOT VTR-Einstufung, die die Kerosinspezifikation nicht erfüllt, und einen Schwefelgehalt von 2000 Gew.-ppm bis 3500 Gew.-ppm,
wobei die erneuerbare Komponente eine von Sauerstoff befreite und entwachste erneuerbare Komponente ist, die von Triglyceriden und/oder Fettsäuren abgeleitet ist und ein Verhältnis von Isoparaffin zu normalem Paraffin von 2:1 bis 6:1 und einen Aromatengehalt von weniger als 1 Vol.-% aufweist,
wobei 75 Vol.-% bis 97 Vol.-% der auf Mineralöl basierten Destillatskomponenten mit 3 Vol.-% bis 25 Vol.-% der erneuerbaren Komponente gemischt werden, um das spezifikationsgemäße Kerosinzusammensetzung zu bilden, und wobei die spezifikationsgemäße Kerosinzusammensetzung alle folgenden aufgezählten Eigenschaften aufweist: einen Endsiedepunkt von höchstens 300 °C, einen Gefrierpunkt von mindestens -40 °C, einen Rauchpunkt von mindestens 18 mm, einen Naphthalingehalt von höchstens 3,0 Vol.-%, eine JFTOT VTR-Einstufung, die die Kerosinspezifikation erfüllt, und einen Schwefelgehalt von höchstens 3000 Gew.-ppm.

2. Verwendung nach Anspruch 1, wobei die auf Mineralöl basierte Destillatszusammensetzung einen T90-Siedepunkt von 270 °C bis 285 °C und einen Endsiedepunkt von 285 °C bis 299 °C aufweist.

3. Verwendung nach Anspruch 1, wobei die erneuerbare Komponente durch ein Verfahren hergestellt ist, bei dem eine unverarbeitete erneuerbare Triglycerid- und/oder Fettsäurezusammensetzung bereitgestellt wird, die einen Sauerstoffgehalt aufweist und bei der mindestens 85% der Acylketten 9 bis 15 Kohlenstoffatome aufweisen,
die unverarbeitete erneuerbare Zusammensetzung mit einem H₂-enthaltenden Gas in Gegenwart eines Desoxidationskatalysators unter Bedingungen in Kontakt gebracht wird, die ausreichen, um einen Sauerstoffgehalt von weniger als 100 Gew.-ppm zu erzielen und/oder um den Sauerstoffgehalt um mindestens 98 Gew.-% zu verringern, und
gleichzeitig mit oder dem Desoxidationsschritt folgend eine Entwachsung durchgeführt wird, indem mit einem H₂-enthaltenden Gas in Gegenwart eines Entwachsungskatalysators unter Bedingungen in Kontakt gebracht wird, die ausreichen, um überwiegend Isomerisierung zu verursachen und um minimales Cracken zu verursachen, sodass das Produkt des Entwachsungsschrittes das erforderliche Verhältnis von Isoparaffin zu normalem Paraffin und den erforderlichen Aromatengehalt aufweist.

4. Verwendung nach Anspruch 3, wobei die Desoxidations- und Entwachsungsschritte gleichzeitig durchgeführt werden, wobei ein einzelner geträgerter Metallkatalysator verwendet wird, in dem eine aktive Metallkomponente auf einem Katalysatorträger abgeschieden ist.

5. Verwendung nach Anspruch 4, wobei der Katalysatorträger einen zeolithischen Träger umfasst, der eine eindimensionale zehnringige Porenstruktur aufweist.

6. Verwendung nach Anspruch 4 oder Anspruch 5, wobei der Katalysatorträger Zeolith Beta, Zeolith Y, ultrastabilen Zeolith Y, dealuminierten Zeolith Y, ZBM-30, ZSM-22, ZSM-23, ZSM-35, ZSM-48, MCM-41, MCM-48 oder eine Kombination oder Verwachsung davon umfasst.

7. Verwendung nach einem der Ansprüche 4 bis 6, wobei die aktive Metallkomponente ein Metall aus den Gruppen 8 bis 10 des Periodensystems der Elemente umfasst und gegebenenfalls auch ein Metall aus der Gruppe 6 des Periodensystems der Elemente umfasst.

8. Verwendung nach Anspruch 7, wobei die aktive Metallkomponente ein Edelmetall umfasst, das ausgewählt ist aus der Gruppe bestehend aus Platin, Palladium, Ruthenium und Kombinationen davon.

9. Verwendung nach Anspruch 7, wobei die aktive Metallkomponente mindestens eines aus Cobalt, Nickel und Eisen umfasst und auch Molybdän und/oder Wolfram umfasst.

## Revendications

1. Utilisation d'un constituant renouvelable pour la production d'une composition de carburéacteur répondant aux spécifications à partir d'un carburéacteur hors spécifications,
dans laquelle le carburéacteur hors spécifications est un constituant distillat de type kérosène/aviation à base minérale ayant un point initial d'ébullition d'au moins 100 °C et deux ou plus de deux des propriétés énumérées suivantes : un point d'ébullition T90 de 260 °C à 295 °C ; un point final d'ébullition de 275 °C à 300 °C ; un point de congélation de -45 °C à -20 °C ; un point de fumée de 14 mm à 19 mm ; une teneur en naphtalène de 2,8 % en volume à 3,5 % en volume ; une classification sur le tube de mesure visuelle (VTR) du test de stabilité thermique à l'oxydation (JFTOT) s'inscrivant dans la spécification pour du carburéacteur ; et une teneur en soufre de 2000 ppm en poids à 3500 ppm en poids ;
dans laquelle le constituant renouvelable est un constituant renouvelable désoxygéné et déparaffiné issu de triglycérides et/ou d'acides gras et ayant un rapport des isoparaffines aux paraffines normales de 2:1 à 6:1 et une teneur en composés aromatiques inférieure à 1 % en volume ;
dans laquelle de 75 % en volume à 97 % en volume des constituants distillats à base minérale sont mélangés avec 3 % en volume à 25 % en volume du constituant renouvelable pour former la composition de carburéacteur répondant aux spécifications et
dans laquelle la composition de carburéacteur répondant aux spécifications a la totalité des propriétés énumérées suivantes : un point final d'ébullition d'au maximum 300 °C ; un point de congélation d'au maximum - 40 °C ; un point de fumée d'au moins 18 mm ; une teneur en naphtalène d'au maximum 3,0 % en volume ; une classification sur le VTR du JFTOT passant la spécification pour du carburéacteur ; et une teneur en soufre d'au maximum 3000 ppm en poids.

2. Utilisation selon la revendication 1, dans laquelle la composition de distillats à base minérale a un point d'ébullition T90 de 270 °C à 285 °C et un point final d'ébullition de 285 °C à 299 °C.

3. Utilisation selon la revendication 1, dans laquelle le constituant renouvelable est préparé par un procédé qui comprend :
l'utilisation d'une composition renouvelable brute de triglycérides et/ou d'acides gras ayant une teneur en oxygène et dans laquelle au moins 85 % des chaînes acyle ont de 9 à 15 atomes de carbone ;
la mise en contact de la composition renouvelable brute avec un gaz contenant de l'H₂ en présence d'un catalyseur de désoxygénation dans des conditions suffisantes pour atteindre une teneur en oxygène inférieure à 100 ppm en poids et/ou pour réduire la teneur en oxygène d'au moins 98 % en poids ; et
en même temps que l'étape de désoxygénation ou après celle-ci, la mise en oeuvre d'un déparaffinage par la mise en contact avec un gaz contenant de l'H₂ en présence d'un catalyseur de déparaffinage dans des conditions suffisantes pour provoquer principalement l'isomérisation et pour provoquer un craquage minimal, de façon telle que le produit de l'étape de déparaffinage a le rapport des isoparaffines aux paraffines normales et la teneur en composés aromatiques requis.

4. Utilisation selon la revendication 3, dans laquelle les étapes de désoxygénation et de déparaffinage sont effectuées simultanément à l'aide d'un seul catalyseur métallique supporté, dans lequel un constituant métallique actif est disposé sur un support de catalyseur.

5. Utilisation selon la revendication 4, dans laquelle le support de catalyseur comprend un support zéolitique présentant une structure poreuse unidimensionnelle cyclique à 10 chaînons.

6. Utilisation selon la revendication 4 ou la revendication 5, dans laquelle le support de catalyseur comprend de la zéolite bêta, de la zéolite Y, de la zéolite Y ultrastable, de la zéolite Y ayant subi une désaluminisation, des zéolites ZBM-30, ZSM-22, ZSM-23, ZSM-35, ZSM-48, MCM-41, MCM-48 ou une association ou un enchevêtrement de celles-ci.

7. Utilisation selon l'une quelconque des revendications 4-6, dans laquelle le constituant métallique actif comprend un métal des groupes 8-10 du tableau périodique des éléments et éventuellement il comprend également un métal du groupe 6 du tableau périodique des éléments.

8. Utilisation selon la revendication 7, dans laquelle le constituant métallique actif comprend un métal noble choisi dans le groupe constitué par le platine, le palladium, le ruthénium et les associations de ceux-ci.

9. Utilisation selon la revendication 7, dans laquelle le constituant métallique actif comprend au moins l'un du cobalt, du nickel et du fer et comprend également du molybdène et/ou du tungstène.
